# EUROPEAN PATENT SPECIFICATION

(11) **EP 1 942 118 B1**
(45) Date of publication and mention of the grant of the patent: **11.09.2013**
(21) Application number: 06822003.7
(22) Date of filing: 20.10.2006
(51) Int. Cl.: C08F 6/16, C08F 2/26, C08F 14/26

(54) **FLUORORESIN WITH LOW FLUORINE-CONTAINING EMULSIFIER RESIDUAL AND METHOD FOR PRODUCING SAME**
FLUORHARZ MIT EINEM EMULGATORREST MIT GERINGEM FLUORANTEIL UND HERSTELLUNGSVERFAHREN DAFÜR
FLUORORESINE A FAIBLE TENEUR EN RESIDU EMULSIFIANT ET SON PROCEDE DE PRODUCTION

(30) Priority: 26.10.2005 JP 2005310828
(43) Date of publication of application: 09.07.2008
(73) Proprietor: Asahi Glass Company, Limited, Chiyoda-ku Tokyo 100-8405 (JP)
(72) Inventor: MATSUOKA, Yasuhiko, Chiyoda-ku, Tokyo 1008405 (JP); HIGUCHI, Shinya, Chiyoda-ku, Tokyo 1008405 (JP); HOSHIKAWA, Jun, Chiyoda-ku, Tokyo 1008405 (JP); KAMIYA, Hiroki, Chiyoda-ku, Tokyo 1008405 (JP)
(74) Representative: Müller-Boré & Partner Patentanwälte
(86) International application number: PCT/JP2006/320942
(87) International publication number: WO 2007/049517

(56) References cited:
- EP-A1- 1 783 167
- EP-A1- 1 939 223
- EP-A2- 1 279 681
- WO-A1-2005/007709
- JP-A- 2002 308 914
- JP-A- 2002 532 583
- JP-A- 2003 119 204
- JP-A- 2005 290 350
- JP-A- 2006 274 237
- JP-A- 2006 321 797
- US-A- 5 463 021

## Description

The present invention relates to a process for producing a non-melt processable polytetrafluoroethylene (PTFE) by emulsion polymerization by using a specific fluorinated emulsifier.

Aqueous emulsion polymerization is applied in production of a fluorinated polymer such as polytetrafluoroethylene (hereinafter referred to as PTFE) which is a non-melt-processable fluororesin, a melt-processable fluororesin or a fluoroelastomer. In aqueous emulsion polymerization of a fluorinated monomer, ammonium perfluorooctanoate (hereinafter referred to as APFO) which is a fluorinated emulsifier is usually used as an emulsifier in an aqueous medium not to interupt a polymerization reaction by a chain transfer.

By this aqueous emulsion polymerization, an aqueous emulsion of a fluorinated polymer may be obtained. By coagulating the aqueous emulsion of a fluororesin, followed by drying, a fluororesin in the form of e.g. a powder may be obtained. Further, such a powder of a fluororesin is used as a material for various molded products. If the fluorinated emulsifier used in aqueous emulsion polymerization remains in the raw material such as the powder of a fluororesin for a molded product, it is not possible to provide a molded product to be used in the fields of e.g. semiconductors and medical equipments, required to have a particularly high purity.

Further, with respect to APFO which is usually used for aqueous emulsion polymerization of a fluorinated monomer, there has been a concern expressed about accumulation potential from the environmental and sanitary viewpoints, and also from such viewpoints, it is desired to reduce the residual amount in the molded products.

A method to obtain a fluororesin having a higher purity by washing and purifying an aqueous emulsion of a fluororesin, is suggested (Patent Documents 1, 2 and 3). However, in such prior art, APFO is used, and a special operation is thereby required, such as use of an ion exchanger, handling of an aqueous emulsion under a strong acidity, or extraction with a solvent.

In an Example in Patent Document 4, CF₃CF₂OCF(CF₃)CF₂OCF(CF₃)COONH₄ is disclosed as a polymerization emulsifier, but it was found that the emulsifier had a higher bioaccumulation potential than APFO. Further, it was also found that the emulsifier tends to remain in a larger amount in a fluororesin.
Patent Document 1: JP-A-6-192321
Patent Document 2: JP-A-2003-82019
Patent Document 3: WO2005/007709
Patent Document 4: JP-A-2003-119204

An object of the present invention is to provide a process for producing a non-melt-processable polytetrafluoroethylene (PTFE) which contains substantially no APFO, and which has a low residual amount of a fluorinated emulsifier as compared with a case using APFO.

The present inventors have conducted extensive studies to accomplish the above object, and as a result, they have found that it is possible to accomplish the object by aqueous emulsion-polymerization of a fluorinated monomer by using a specific fluorinated emulsifier. The present invention has been accomplished on the basis of this discovery.

Namely, the present invention provides the following:
(1) A process for producing a non-melt-processable polytetrafluoroethylene (PTFE), which comprises emulsion-polymerizing a fluorinated monomer in an aqueous medium containing a fluorinated emulsifier of the formula (1) :

   XCF₂CF₂(O)ₘCF₂CF₂OCF₂COOA

   wherein X is a hydrogen atom or a fluorine atom, A is a hydrogen atom, an alkali metal or NH₄, and m is an integer of from 0 or 1, and coagulating the obtained aqueous emulsion, followed by drying at a temperature of at most 230°C, to produce a non-melt-processable polytetrafluoroethylene (PTFE) wherein the residual amount of the fluorinated emulsifier is at most 10 ppm.
(2). The process for producing a non-melt-processable polytetrafluoroethylene (PTFE) according to (1), wherein the fluorinated emulsifier of the formula (1) is CF₃CF₂OCF₂CF₂OCF₂COONH₄.

The fluororesin obtained by the process of the present invention contains substantially no APFO and has a low residual amount of the specific fluorinated emulsifier, whereby it is useful as a raw material for a molded product to be used in the fields of e.g. semiconductors and medical equipments, required to have a particularly high purity, and it is excellent in environmental and sanitary viewpoints. Particularly, when CF₃CF₂OCF₂CF₂OCF₂COONH₄ is used as the specific emulsifier, not only that its residual amount in the fluororesin is low, but also the bioaccumulation potential of the fluorinated emulsifier itself is low, and the emulsifier is remarkably excellent in environment and sanitary viewpoints.

In the present invention, a fluorinated monomer is at least tetrafluoroethylene (TFE).

The fluororesin of the present invention is PTFE which is obtained by polymerizing the above fluorinated monomer.

PTFE includes a modified PTFE. The modified PTFE is a modified PTFE which does not have melt-processability and which is a copolymer of TFE with at least one fluorinated comonomer selected from the group consisting of hexafluoropropylene (HFP), a perfluoro(alkyl vinyl ether) (PFAVE), chlorotrifluoroethylene (CTFE), a (perfluoroalkyl) ethylene, vinylidene fluoride (VdF), a perfluoro (alkenyl vinyl ether), perfluoro(2,2-dimethyl-1,3-dioxol) and a perfluoro(4-alkyl-1,3-dioxol). In the modified PTFE, the content of constituting units based on a comonomer is preferably at most 0.5 mass%, more preferably at most 0.4 mass%.

In the present invention, the fluorinated emulsifier of the formula (1) is used as a fluorinated emulsifier to be used for emulsion polymerization. The fluorinated emulsifier of the formula (1) has a good function to stabilize polymerization, and it is suitably used.

X is preferably a fluorine atom from the viewpoint of stability of polymerization. Further, the value for m is preferably 1 from the viewpoint of the stability of polymerization and the mechanical stability of the aqueous PTFE emulsion. A may, for example, be H, Li, Na, K or NH₄. Particularly, NH₄ is preferred because it has good solubility in water, and a metal ion component will not remain in the PTFE fine powder as an impurity.

Among the fluorinated emulsifiers of the formula (1), particularly preferred is e.g. CF₃CF₂CF₂CF₂OCF₂COONH₄ or CF₃CF₂OCF₂CF₂OCF₂COONH₄ (hereinafter referred to as EEA), and EEA is more preferred.

The fluorinated emulsifier of the formula (1) is obtained by a known fluorination method such as a liquid phase fluorination method wherein the corresponding non-fluorinated carboxylic acid or an ester of a partly fluorinated carboxylic acid, is used and reacted with fluorine in a liquid phase, a fluorination method using a cobalt fluoride, or an electrochemical fluorination method, and the obtained fluorinated ester bond is hydrolyzed, followed by purification and then by neutralization with ammonia.

When emulsion polymerization is carried out to produce PTFE, the fluorinated emulsifier of the formula (1) is used preferably in an amount of from 100 to 100,000 ppm, based on an amount of PTFE finally formed (hereinafter referred to also as final yield of PTFE), and in the case of PTFE, it is preferably from 1,500 to 20,000 ppm, more preferably from 2,000 to 20,000 ppm, based on the final yield of PTFE.

In the emulsion polymerization for producing PTFE, an aqueous medium, an emulsifier, a stabilizing agent and a polymerization initiator, are used for a polymerization reaction of TFE or TFE with other copolymerizable monomer.

As the stabilizing agent, paraffin wax, fluorinated oil, fluorinated solvent or silicone oil, is preferred. Such stabilizing agents may be used alone or in combination as a mixture of two or more of them. As the stabilizing agent, paraffin wax is more preferred. The paraffin wax may be liquid, semisolid or solid at room temperature, but it is preferably a saturated hydrocarbon having at least 12 carbon atoms. The melting point of the paraffin wax is usually preferably from 40 to 65°C, more preferably from 50 to 65°C. The amount of the stabilizing agent to be used is preferably from 0.1 to 12 mass%, more preferably from 0.1 to 8 mass%, based on the mass of water to be used.

As the polymerization initiator, a water-soluble radical polymerization initiator or a water-soluble redox catalyst may, for example, be preferably used. As the water-soluble radical initiator, a persulfate such as ammonium persulfate or potassium persulfate, or a water-soluble organic peroxide such as disuccinic acid peroxide, bisglutaric acid peroxide or tert-butyl hydroperoxide, is preferred. As the water-soluble redox catalyst, a combination of an oxidizing agent, such as a bromate compound, a chlorate compound, a persulfate compound, a permanganate compound or a hydrogen peroxide, with a reducing agent such as a sulfite compound, a hydrogensulfite compound, a thiosulfite compound or an organic acid, may be used. The polymerization initiators may be used alone or in combination as a mixture of two or more of them. Further, an oil-soluble initiator may be used in the same manner. As the polymerization initiator, disuccinic acid peroxide is more preferred.

The amount of the polymerization initiator to be used is usually preferably from 0.0001 to 0.20 mass%, more preferably from 0.01 to 0.15 mass%.

Further, in the emulsion polymerization for producing PTFE, it is possible to use a chain transfer agent such as methanol or ethanol, in order to control the molecular weight and to increase the stability of the aqueous emulsion. As the chain transfer agent, methanol is more preferred.

The amount of the chain transfer agent to be used is normally preferably from 0 to 1×10⁻⁴ mass% and more preferably from 0 to 5×10⁻⁵ mass%, based on the final yield of PTFE.

The conditions for the emulsion polymerization in the present invention are suitably selected depending upon the type of monomers to be used, the copolymerization ratio, the decomposition temperature of the polymerization initiator, etc.

The temperature for the emulsion polymerization is preferably from 10 to 95°C, more preferably from 40 to 80°C. The polymerization pressure is preferably from 0.5 to 4.0 MPa, more preferably from 0.6 to 3.5 MPa. The polymerization time is preferably from 60 to 520 minutes, more preferably from 90 to 360 minutes.

According to the present invention, the average primary particle size of primary particles of PTFE in the aqueous PTFE emulsion obtained by emulsion polymerization, can be made in a range of from 0.18 to 0.50 µm, particularly in a range of from 0.19 to 0.40 µm. In the present invention, the average primary particle size is a median size measured by a laser scattering particle size partition analyzer.

The concentration of the fluororesin in the aqueous emulsion of the fluororesin obtained by emulsion polymerization, is preferably from 10 to 45 mass%. If the concentration of the fluororesin is too low, it will be difficult to coagulate the fluororesin. Further, if the concentration of the fluororesin is too high, the non-coagulated fluororesin will remain, and the waste liquid after the coagulation will be turbid. The concentration of the fluororesin is more preferably from 15 to 45 mass%, further preferably from 20 to 40 mass%.

A PTFE fine powder may be obtained from the aqueous PTFE emulsion by a known method. That is, the aqueous PTFE emulsion is diluted with water to a concentration of from 10 to 20 mass%, followed by intense stirring for coagulation. The pH may be adjusted, or a coagulating agent such as an electrolyte or a water-soluble organic solvent, may be added as the case requires. The coagulated PTFE is separated from water, followed by drying, whereby water remain in PTFE can easily be removed. Further, the present invention has characteristics such that by drying, not only it is possible to remove water, but also it is possible to reduce the fluorinated emulsifier of the formula (1) remained in PTFE.

Further, it is possible to coagulate the fluororesin by freezing the fluororesin aqueous emulsion.

As the coagulating agent, it is possible to use one usually used for coagulation of an aqueous emulsion of a fluororesin wherein an emulsifier such as APFO is used. For example, a water-soluble salt such as calcium chloride, magnesium chloride, aluminum chloride or aluminum nitrate, an acid such as nitric acid, hydrochloric acid or sulfuric acid, a water-soluble organic liquid such as an alcohol or acetone, may be mentioned. The amount of the coagulating agent to be added is preferably from 0.001 to 20 parts by mass, particularly preferably from 0.01 to 10 parts by mass, based on 100 parts by mass of the fluororesin aqueous emulsion. The concentration of the fluororesin in the aqueous emulsion used for the coagulation, is preferably from 1 to 50 mass%, more preferably from 5 to 40 mass%.

The coagulated fluororesin is preferably removed by filtration and washed with washing water. As the washing water, deionized water, pure water or ultrapure water is mentioned. The amount of the washing water is preferably from 1 to 10 times the mass of the fluororesin. Even with such a small amount, it is possible to reduce the fluorinated emulsifier of the above formula (1) adhered to the fluororesin, by washing once. The number of times of washing is preferably small from the viewpoint of workability, and it is preferably at most 5 times, more preferably from 1 to 3 times. The washing temperature is usually preferably from 10 to 40°C.

Drying of particles of the PTFE fine powder is normally carried out in a state of causing little flow of wet powder obtained by usual coagulation, preferably in a state of leaving it at rest, by means of vacuum, a high frequency wave or hot air. The drying is carried out preferably from 10 to 230°C, particularly preferably from 100 to 230°C.

By using the fluorinated emulsifier of the present invention, it is possible to obtain PTFE which has a small amount of fluorinated emulsifier remained even at a temperature of at most 200°C. In order to further reduce the fluorinated emulsifier remained in PTFE, drying may be done after the washing in an aqueous medium.

Gas discharged by the drying, may be recovered by collecting it in an alkaline liquid having a concentration such that the fluorinated emulsifier of the formula (1) separates therein. Further, the fluorinated emulsifier in the waste liquid may be recovered by a known method and be recycled.

By the present invention, it is possible to make the standard specific gravity of the PTFE fine powder to be in a range of from 2.14 to 2.20, whereby it is possible to obtain PTFE having a high molecular weight. Further, by changing conditions for emulsion polymerization, it is possible to make the standard specific gravity to be in a range of more than 2.20 upto 2.25.

The average particle size of the PTFE fine powder of the present invention is preferably from 350 to 650 µm, more preferably from 400 to 600 µm. Further, the apparent density is preferably from 0.35 to 0.65 g/mL, more preferably from 0.40 to 0.60 g/mL.

Further, a filler to impart coloration, strength and conductivity, such as titanium oxide, carbon, glass fiber, carbon fiber or graphite, may be added during the coagulation process.

By the present invention, it is possible to obtain the fluororesin having a residual amount of at most 10 ppm of the fluorinated emulsifier of the formula (1). Further, by the present invention, it is possible to make the residual amount of the fluorinated emulsifier of the formula (1) in the fluororesin, to be at most 5 ppm, particularly at most 1 ppm. The present invention has a characteristic such that, even if the amount of the fluorinated emulsifier of the formula (1) adhered to the fluororesin, is small, it is possible to effectively remove the fluorinated emulsifier of the formula (1). From such a viewpoint, when the present invention is applied for PTFE as a fluororesin, it exhibits a remarkable effect such that the adhered residual amount of the fluorinated emulsifier is extremely low.

### EXAMPLES

Now, the present invention will be described in further detail with reference to Examples and Comparative Examples, but it should be understood that the present invention is by no means restricted thereto. Methods for measuring characteristics of the fluororesin are the following:
(A) Average primary particle size (UNIT: µm) of PTFE obtained from emulsion polymerization: Measured by using a laser scattering particle size partition analyzer (trade name: "LA-920", manufactured by HORIBA, Ltd.).
(B) Fluorinated emulsifier concentration: Approximately 10 g of the fluororesin is weighed, and 25 mL of acetone and 15 mL of deionized water were added thereto, followed by mixing thoroughly, to obtain a mixed sample. Then, in a test tube, 4 mL of a methylene blue solution (to about 500 mL of water, 12 g of sulfuric acid was gradually added, and after cooling, 0.03 g of methylene blue and 50 g of anhydrous sodium sulfate were dissolved therein, and then, water was added thereto to make it 1 L) and 5 mL of chloroform were added, and then, 1 mL of the liquid phase of the above mixed sample was added, followed by shaking sufficiently. After leaving the test tube at rest, the bottom layer of the chloroform phase was collected, and the absorbance at 630 nm was measured by a spectrophotometer. Corresponding to the amount of the fluorinated emulsifier which is an anionic surfactant, the chloroform phase expressed a blue color. By using an aqueous solution of the fluorinated emulsifier having the preliminarily known concentration, an absorbance was measured in the same manner, and by using a calibration curve thereby prepared, the fluorinated emulsifier concentration in the sample was obtained.
(C) Standard specific gravity (hereinafter referred to also as "SSG"): Measured in accordance with ASTM D1457-91a and D4895-91a. 12.0 g of PTFE was weighed and kept in a cylindrical die with an inner diameter of 28.6 mm under a pressure of 34.5 MPa for 2 minutes. It was put into an oven at 290°C, and the temperature was raised at a rate of 120°C/hr. It was kept at 380°C for 30 minutes. Then, the temperature was lowered at a rate of 60°C/hr, and the die was kept at 294°C for 24 minutes. The molded product was kept in a desiccator at 23°C for 12 hours, and thereafter, the specific gravities of the molded product and water at 23°C were measured and taken as the standard specific gravities.
(D) Average particle size (UNIT: µm) of fine powder: Measured in accordance with JIS K6891. 20, 30, 40 and 60 mesh standard sieves were piled in this order from the top. The powder was put on the 20 mesh sieve and sieved, and the mass of remained PTFE powder on each sieve was measured. The 50% particle size calculated by a logarithmic probability paper based on the above mass, is designated as the average particle size.
(E) Apparent density (unit: g/ml): Measured in accordance with JIS K6891. A sample was dropped from a funnel set above, into a stainless steel weighing bottle with an inner volume of 100 ml, and a part of the sample bulging from the weighing bottle was scraped off with a flat plate. Thereafter, the weight of the sample remaining in the weighing bottle was measured, and a value obtained by dividing the weight of the sample by the inner volume of the weighing bottle was taken as the apparent density.

### REFERENCE EXAMPLE 1: Production Example of CF₃CF₂OCF (CF₃) CF₂OCF (CF₃) COONH₄

2.58 g of CsF and 13.06 g of tetraglyme were charged into a hastelloy C autoclave having a capacity of 200 mL, followed by degassing, and then, 20.83 g of CF₃COF was introduced. Then, the autoclave was cooled to -20°C, and under a hermetically sealed and stirred condition, 57.5 g of hexafluoropropene oxide was introduced over a period of about one hour. The initial pressure showed 0.6 MPa. The reaction was continued for about one hour until the pressure no longer decreased, and then, the autoclave was returned to room temperature to obtain 78.57 g of a reaction crude liquid. This liquid was subjected to a GC analysis, whereby it was found that in addition to 49.7% of CF₃CF₂OCF(CF₃)CF₂OCF(CF₃)COF as the objective product, 19.1% of CF₃CF₂OCF(CF₃)COF and 12.8% of CF₃CF₂O(CF(CF₃)CF₂O)₂CF(CF₃)COF, were contained.

The same reaction was carried out by using 32.26 g of CF₃COF. Distillation and purification were carried out by combining 2 batches of the reaction crude liquid containing the obtained objective product. By using a 30 cm distillation column provided with a reflux condenser and packed with Helipack No. 1, 52.47 g of the objective product having a boiling point of 71°C/400torr, was obtained. The objective product was charged in a reactor made of PTFE, and 2.32 g of water was drop-wise added with stirring to carry out hydrolysis. Then, HF was removed by nitrogen bubbling to obtain 50.45 g of a crude liquid of CF₃CF₂OCF(CF₃)CF₂OCF(CF₃)COOH. The crude liquid was subjected to simple distillation by a simple distillation apparatus made of glass to obtain 40 g of CF₃CF₂OCF(CF₃)CF₂OCF(CF₃)COOH.

Then, using 40 g of CF₃CF₂OCF(CF₃)CF₂OCF(CF₃)COOH, conversion to an ammonium salt was carried out. Namely, by using a reactor made of glass, 40 g of the above carboxylic acid was dissolved into 150 g of CClF₂CF₂CHClF, and then, 10.89 g of 28% aqueous ammonia was drop-wise added thereto at room temperature to form the ammonium salt. After that, the solvent CClF₂CF₂CHClF was distilled off, followed by drying under reduced pressure to obtain 39.4 g of CF₃CF₂OCF(CF₃)CF₂OCF(CF₃)COONH₄ as a white solid. REFERENCE EXAMPLE 2: Measurement of 1-Octanol/Water Partition Coefficient (LogPOW)

In accordance with OECD Test Guideline 117, 1-octanol/water partition coefficient (LogPOW) of a fluorinated emulsifier was measured by using HPLC (high performance liquid chromatography).

Conditions for the measurement were as follows: column: TOSOH ODS-120T column (ϕ 4.6 mm × 250 mm), eluent: acetonitrile/0.6 mass% of HC10₄ aqueous solution = 1/1(vol/vol%), flow rate: 1.0 m/minute, sample amount: 300 µL, column temperature: 40°C, and detection light: UV 210 nm (WO2005-42593).

HPLC was carried out on standard substances (heptanoic acid, octanoic acid, nonanoic acid and decanoic acid) having known 1-octanol/water partition coefficients, and a calibration curve was prepared from the respective elution times and octariol/water partition coefficients of the respective standard substances. Based on this calibration curve, a value of partition coefficient (LogPOW) between 1-octanol and water was calculated from the elution time by HPLC of the fluorinated emulsifier. The results are shown in Table 1.

EEA has a small LogPOW value as compared to ammonium perfluorooctanate (APFO), thus indicating that its bioaccumulation potential is low. On the other hand, CF₃CF₂OCF(CF₃)CF₂OCF(CF₃)COONH₄ which was synthesized in Reference Example 1, has a structure similar to EEA, but its LogPOW value is larger than APFO, of which bioaccumulation potential is concerned about, thus indicating that its accumulation in a living organism is high.

Further, in general, in order to judge whether or not a chemical substance is apt to be accumulated in a living organism, a testing method for measurement of a partition coefficient (LogPOW) between 1-octanol and water, is stipulated. As the testing method, in addition to "Partition Coefficient (1-octanol/water) Shake Flask Method" as stipulated in OECD test guideline 107 and in Japanese Industrial Standards Z 7260-107 (2000), a HPLC method (high-performance liquid chromatography) as stipulated and published in OECD Test Guideline 117, is used. A compound having a large partition coefficient value has a large tendency for bioaccumulation, and a compound having a small value means a small tendency for bioaccumulation. In a case where the LogPOW value is less than 3.5, it is considered proper to judge that it is not a high-concentration, and bioaccumulation is also considered to be small.

**TABLE 1**

| Fluorinated emulsifier | LogPOW |
|---|---|
| CF₃CF₂OCF₂CF₂OCF₂COONH₄ | 3.13 |
| CF₃(CF₂)₆COONH₄ | 3.67 |
| CF₃CF₂OCF(CF₃)CF₂OCF(CF₃)COONH₄ | 4.03 |

### EXAMPLE 1

Into a 100 L stainless steel autoclave equipped with a baffle plate and a stirrer, 70 g of EEA, 872 g of paraffin wax (melting point: 52°C) and 59 liters of deionized water were charged. The air in the autoclave was replaced with nitrogen, and then the pressure was reduced. Further, the pressure was increased by adding TFE, and the temperature was raised to 70°C with stirring. Then, the pressure was raised to 1.765 MPa by adding TFE, and 5.0 g of disuccinic acid peroxide (concentration: 80 mass%, the rest being water) was dissolved in 1 liter of warm water at about 70°C, and then it was injected into the autoclave. The inner pressure decreased to 1.746 MPa in about 3 minutes.

Polymerization was proceeded by adding TFE to keep the inner pressure of the autoclave at 1.765 MPa. EEA was dissolved in warm water, and the total amount of 125 g was added as EEA during the polymerization. Further, ammonium sulfite was dissolved in water, and the total amount of 4 g was added as ammonium sulfite during the polymerization. The temperature was lowered to 64°C in halfway, and it was raised to 80°C in the last half of the polymerization. The reaction was terminated at a point where the amount of TFE added reached 23 kg, and TFE in the autoclave was released into the atmosphere. The polymerization time was 155 minutes. The obtained aqueous PTFE emulsion was cooled, and the supernatant paraffin wax was removed. The solid content concentration of the aqueous PTFE emulsion was about 26 mass%. Further, the average primary particle size of the PTFE fine particles in the aqueous emulsion, was 0.275 µm. Coagulum in the reactor was just about a trace.

This aqueous PTFE emulsion was diluted with pure water to a concentration of 10 mass%, and it was adjusted to be at 20°C, followed by stirring to coagulate it. Then, the obtained PTFE powder was divided into 3 portions. The respective portions of the powder were dried at different temperatures of 140°C, 160°C and 180°C in an oven for 6 hours. With respect to the dried respective PTFE powders, the apparent density and the amount of the fluorinated emulsifier in the powder were measured. The results are shown in Table 2. SSG of the PTFE powder dried at 180°C was 2.151, and the average particle size was 550 µm.

**TABLE 2**

| | | | |
|---|---|---|---|
| Drying temperature (°C) | 140 | 160 | 180 |
| Apparent density (g/ml) | 0.46 | 0.49 | 0.49 |
| Concentration of fluorinated emulsifier in PTFE (ppm) | 3.5 | 0.8 | Less than 0.5 |

### COMPARATIVE EXAMPLE 1

Into a 100 L stainless steel autoclave equipped with a baffle plate and a stirrer, 35 g of ammonium perfluorooctanoic acid, 872 g of paraffin wax and 59 liters of deionized water were charged. The air in the autoclave was replaced with nitrogen, and then the pressure was reduced. Further, the pressure was increased by adding TFE, and the temperature was raised to 70°C with stirring. Then, the pressure was raised to 1.765 MPa by adding TFE, and 5.0 g of disuccinic acid peroxide (concentration: 80 mass%, the rest being water) dissolved in warm water at about 70°C, was injected into the autoclave. The inner pressure decreased to 1.746 MPa in about 3 minutes.

Polymerization was proceeded by adding TFE to keep the inner pressure of the autoclave at 1.765 MPa. The total amount of 63 g of an ammonium salt of the perfluorooctanoic acid was added during the polymerization. Further, the total amount of 4 g of ammonium sulfite was added during the polymerization. The temperature was lowered to 64°C in halfway, and it was raised to 80°C in the last half of the polymerization. The reaction was terminated at a point where the amount of TFE added reached 23 kg, and TFE in the autoclave was released into the atmosphere. The polymerization time was 173 minutes. The obtained aqueous PTFE emulsion was cooled, and the supernatant paraffin wax was removed. The solid content concentration of the aqueous PTFE emulsion was about 26 mass%. Further, the average primary particle size of the PTFE fine particles in the aqueous emulsion, was 0.245 µm. Coagulum in the reactor was just about a trace.

This aqueous PTFE emulsion was diluted with pure water to a concentration of 10 mass%, and it was adjusted to be at 20°C, followed by stirring to coagulate it. Then, the obtained PTFE powder was divided into 3 portions. The respective portions of the powder were dried at different temperatures of 140°C, 160°C and 180°C in an oven for 6 hours. With respect to the dried respective PTFE powders, the apparent density and the amount of the fluorinated emulsifier in the powder were measured. The results are shown in Table 3. Despite the same operation was carried out, the results of the concentration of the fluorinated emulsifier in the PTFE powder were higher than Example 1. SSG of the PTFE powder dried at 180°C was 2.148, and the average particle size was 530 µm.

**TABLE 3**

| | | | |
|---|---|---|---|
| Drying temperature (°C) | 140 | 160 | 180 |
| Apparent density (g/ml) | 0.48 | 0.49 | 0.51 |
| Concentration of fluorinated emulsifier in PTFE (ppm) | 6.5 | 1.8 | 1.5 |

### EXAMPLE 2

Into a 1 L stainless steel autoclave equipped with a baffle plate and a stirrer, 0.38 g of EEA, 7.8 g of paraffin wax (melting point: 52°C) and 660 mL of deionized water were charged. The air in the autoclave was replaced with nitrogen, and then the pressure was reduced. Further, the pressure was increased by adding TFE, and the temperature was raised to 70°C with stirring. Then, the pressure was raised to 1.4 MPa by adding TFE, and 0.6 g of disuccinic acid peroxide (concentration: 80 mass%, the rest being water) was dissolved in 15 mL of water at room temperature, and then it was injected into the autoclave. The inner pressure decreased to 1.3 MPa in about 3 minutes.

Polymerization was proceeded by adding TFE to keep the inner pressure of the autoclave at 1.4 MPa. The reaction was terminated at a point where the amount of TFE added reached 140 g, and TFE in the autoclave was released into the atmosphere. The polymerization time was 259 minutes. The obtained aqueous PTFE emulsion was cooled, and the supernatant paraffin wax was removed. The solid content concentration of the aqueous PTFE emulsion was about 19 mass%. Further, the average primary particle size of the PTFE fine particles in the aqueous emulsion, was 0.270 µm.

This aqueous PTFE emulsion was diluted with pure water to a concentration of 10 mass%, and it was adjusted to be at 20°C, followed by stirring to coagulate it. Then, the obtained PTFE powder was divided into 3 portions. The respective portions of the powder were dried at different temperatures of 140°C, 160°C and 180°C in an oven for 6 hours. With respect to the dried respective PTFE powders, the apparent density and the amount of the fluorinated emulsifier in the powder were measured. The results are shown in Table 4.

### COMPARATIVE EXAMPLE 2

The polymerization operation was carried out in the same manner as in Example 2, except for changing the emulsifier used in the polymerization from 0.38 g of EEA to 0.19 g of APFO. The polymerization time was 337 minutes, and the solid content concentration of the obtained aqueous PTFE emulsion was about 17 mass%. Further, the average primary particle size of the PTFE fine particles in the aqueous emulsion was 0.257 µm.

This aqueous PTFE emulsion was diluted with pure water to a concentration of 10 mass%, and it was adjusted to be at 20°C, followed by stirring to coagulate it. Then, the obtained PTFE powder was divided into 3 portions. Then, in the same manner as in Example 2,'they were dried at temperatures of 140°C, 160°C and 180°C in an oven for 6 hours. With respect to the dried respective PTFE powders, the amount of the fluorinated emulsifier in the powder was measured. The results are shown in Table 4.

### COMPARATIVE EXAMPLE 3

The polymerization operation was carried out in the same manner as in Example 2, except for changing the emulsifier used in the polymerization from 0.38 g of EEA to 0.38 g of CF₃CF₂-O-CF (CF₃) CF₂-O-CF (CF₃) COONH₄. The polymerization time was 314 minutes, and the solid content concentration of the obtained aqueous PTFE emulsion was about 18 mass%. Further, the average primary particle size of the PTFE fine particles in the aqueous emulsion was 0.257 µm.

This aqueous PTFE emulsion was diluted with pure water to a concentration of 10 mass%, and it was adjusted to be at 20°C, followed by stirring to coagulate it. Then, the obtained PTFE powder was divided into 3 portions. Then, in the same manner as in Example 2, they were dried at temperatures of 140°C, 160°C and 180°C in an oven for 6 hours. With respect to the dried respective PTFE powders, the amount of the fluorinated emulsifier in the powder was measured. The results are shown in Table 4. It was found that with EEA (Example 2), the concentration of the fluorinated emulsifier remained in the PTFE is remarkably low, as compared to APFO (Comparative Example 2) and CF₃CF₂-O-CF(CF₃)CF₂-O-CF(CF₃)COONH₄ (Comparative Example 3) which is synthesized in Reference Example 1.

**TABLE 4**

| Concentration of fluorinated emulsifier in PTFE (ppm) | Drying temperature | | |
|---|---|---|---|
| | 140°C | 160°C | 180°C |
| Ex. 2 | 6.7 | 4.9 | Less than 0.5 |
| Comp. Ex. 2 | 14.8 | 5.6 | 2.3 |
| Comp. Ex. 3 | 15.2 | 9.9 | 6.2 |

The fluororesin obtained by the process of the present invention may be used as a raw material for a molded product in various shapes such as a tube, a sheet, a film, a fiber or a block, and it is used also as a binder for other parts or an additive to improve characteristics. The applications of the molded product may, for example, be various applications including various tubes, wire coverings, sealing materials, porous membranes or filters. Particularly preferred are applications of the molded product in the fields of e.g. semiconductors and medical field equipments, required to have a particularly high purity.

## Claims

1. A process for producing a non-melt-processable polytetrafluoroethylene (PTFE), which comprises emulsion-polymerizing a fluorinated monomer in an aqueous medium containing a fluorinated emulsifier of the formula (1):
XCF₂CF₂ (O)ₘCF₂CF₂OCF₂COOA
wherein X is a hydrogen atom or a fluorine atom, A is a hydrogen atom, an alkali metal or NH₄, and m is an integer of from 0 or 1, and coagulating the obtained aqueous emulsion; followed by drying at a temperature of at most 230°C, to produce a non-melt-processable polytetrafluoroethylene (PTFE) wherein the residual amount of the fluorinated emulsifier is at most 10 ppm.

2. The process for producing a non-melt-processable polytetrafluoroethylene (PTFE) according to Claim 1, wherein the fluorinated emulsifier of the formula (1) is CF₃CF₂OCF₂CF₂OCF₂COONH₄.

## Patentansprüche

1. Verfahren zur Herstellung eines nicht schmelzverarbeitbaren Polytetrafluor-ethylens (PTFE), welches
das Emulsionspolymerisieren eines fluorierten Monomers in einem wässrigen Medium, das einen fluorierten Emulgator der Formel (1):
XCF₂CF₂(O)ₘCF₂CF₂OCF₂COOA
enthält,
wobei X ein Wasserstoffatom oder ein Fluoratom ist, A ein Wasserstoffatom, ein Alkalimetall oder NH₄ ist und m eine ganze Zahl von 0 oder 1 ist, und das Koagulieren der erhaltenen wässrigen Emulsion, gefolgt von Trocknen bei einer Temperatur von höchstens 230°C, umfasst,
um ein nicht schmelzverarbeitbares Polytetrafluorethylen (PTFE) herzustellen, wobei der Restgehalt des fluorierten Emulgators höchstens 10 ppm beträgt.

2. Verfahren zur Herstellung eines nicht schmelzverarbeitbaren Polytetrafluor-ethylens (PTFE) nach Anspruch 1, wobei der fluorierte Emulgator der Formel (1) CF₃CF₂OCF₂CF₂OCF₂COONH₄ ist.

## Revendications

1. Procédé pour produire un polytétrafluoroéthylène (PTFE) non usinable à l'état fondu, qui comprend la polymérisation en émulsion d'un monomère fluoré dans un milieu aqueux contenant un émulsionnant fluoré de formule (1) :
XCF₂CF₂ (O)ₘCF₂CF₂OCF₂COOA
dans laquelle X est un atome d'hydrogène ou un atome de fluor, A est un atome d'hydrogène, un métal alcalin ou NH₄, et m est l'entier 0 ou 1,
et la coagulation de l'émulsion aqueuse obtenue, suivie d'un séchage à une température d'au plus 230°C, pour produire le polytétrafluoroéthylène (PTFE) non usinable à l'état fondu dans lequel la quantité résiduelle de l'émulsionnant fluoré est d'au plus 10 ppm.

2. Procédé pour produire un polytétrafluoroéthylène (PTFE) non usinable à l'état fondu selon la revendication 1, dans lequel l'émulsionnant fluoré de formule (1) est CF₃CF₂OCF₂CF₂OCF₂COONH₄.
